# EUROPEAN PATENT APPLICATION

(11) **EP 4 599 732 A1**
(43) Date of publication of application: **13.08.2025**
(21) Application number: 25155541.3
(22) Date of filing: 03.02.2025
(51) Int. Cl.: A45B 3/04, A45B 25/00, A45B 25/06, A45B 25/08

(54) **UMBRELLA HUB AND BATTERY PACK ASSEMBLY**

(30) Priority: 06.02.2024 US 202463550268 P
(71) Applicant: Qingdao Activa Shade Inc., Pingdu, Qingdao SD 266000 (CN)
(72) Inventor: Ma, Zhun-an, Qingdao, 266000 (CN)
(74) Representative: Schafhaus, Stefan

(57) **Abstract**

An assembly is provided that includes an umbrella hub and a battery pack. The umbrella hub includes a hub body and a support portion. The hub body to be disposed about an umbrella pole. The hub body including an upper surface and a lower surface. The support portion disposed at the lower surface of the hub body. The battery pack includes a housing, an outer periphery, an inner periphery, a projection, and a battery cell. The housing includes a first portion and a second portion. The outer periphery and the inner periphery are each defined in part by the first portion and the second portion. The projection extends from the inner periphery. The projection to rest on the support portion of the umbrella hub to couple the battery pack to the umbrella hub. The battery cell disposed in the housing to supply or receive power through an electrical connection.

## Description

### BACKGROUND

### Field

This application is directed to umbrella hub and battery pack and to umbrella assemblies coupled with or configured to couple with such an umbrella hub and battery pack.

### Description of the Related Art

Umbrellas are one well-known form of shade structures usable in a wide variety of settings. Some umbrellas are well-suited to shelter a large area at a pool deck, marketplace, restaurant, or at a home or other setting. Increasingly portable electronic devices are used away from power sources. Portable battery packs are known for powering electronic devices.

### SUMMARY

While portable battery packs are known, several factors make the use of these devices inconvenient. Portable battery packs can only be used if they can quickly and easily be found. There is a need to provide a storage location that is convenient for users in a variety of settings, e.g., at the pool, in a restaurant or marketplace and at home. Also, many portable battery packs are charged with cords. For example, a USB charging cord can be used with a power adapter to plug a battery pack into an electrical socket. However, users may find themselves at one of these (or other) locations without the cord, adapter or both. It would be desirable to equip an umbrella with a receptacle to which a battery pack can be directly connected, e.g., without requiring a power adapter, USB or other charging cord or both a cord and adapter. It would be beneficial to provide an umbrella with a source of power, e.g., an AC power connection, a solar energy collector or an AC power connection and a solar energy collector.

In one embodiment, an assembly includes an umbrella hub and a battery pack. The umbrella hub includes a hub body and a support portion. The hub body is configured to be disposed about an umbrella pole. The hub body includes an upper surface and a lower surface. The support portion is disposed at the lower surface of the hub body. The battery pack includes a housing, an outer periphery, an inner periphery, a projection, and a battery cell. The hosing includes a first portion and a second portion. The outer periphery and the inner periphery are each defined in part by the first portion and the second portion. The projection extends from the inner periphery. The projection is configured to rest on the support portion of the umbrella hub to couple the battery pack to the umbrella hub. The battery cell is disposed in the housing and configured to supply or receive power through an electrical connection.

In some embodiments, the battery pack includes a first electrical contact disposed on the inner periphery and the umbrella hub includes a downwardly extending surface connecting the support portion and the hub body. The downwardly extending surface includes a second electrical contact configured to align with the first electrical contact.

In some embodiments, the umbrella hub includes a first clocking feature and the battery pack includes a second clocking feature. The first clocking feature and the second clocking feature are examples of alignment features that are configured to align the first electrical contact and the second electrical contact.

In some embodiments, the first clocking feature comprises a recess in the lower surface of the hub body and the second clocking feature comprises a protrusion extending from an upper surface of the battery pack. The recess and the protrusion are configured to align the first electrical contact and the second electrical contact. Clocking (or other alignment) features can include one or more protrusions and one or more recesses located on surfaces that are configured to reside adjacent to each other when the battery pack is assembled to the hub body.

In some embodiments, the support portion extends generally perpendicular to the downwardly extending surface.

In some embodiments, the first portion of the housing and the second portion of the housing are rotatably coupled via a hinge. In some embodiments, the first portion of the housing and the second portion of the housing are configured to separate along one or more portions of a periphery thereof, e.g., by being pivotally coupled via a hinge or by completely separating forming two or more separate portions that can be reconnected around an umbrella pole.

In some embodiments, the battery pack further includes a button deflectable towards a vertical axis. The button configured to engage and disengage a coupler securing the first portion and the second portion of the housing in a closed state.

In some embodiments, the battery pack includes a channel and a recessed area. The channel is formed by or disposed within the inner periphery. The channel is configured to be disposed about or to receive the umbrella pole. The recessed area is disposed between an end of the channel and the projection extending from the inner periphery. The projection encloses a portion of the recessed area. The recessed area is configured to receive the support portion of an umbrella hub to couple the battery pack to the umbrella hub.

In some embodiments, the channel has a first inner diameter, the recessed area has a second inner diameter, and the projection has a third inner diameter. The first inner diameter being smaller than the second inner diameter. The third inner diameter can be smaller than the second inner diameter.

In some embodiments, the battery pack is separable from the umbrella hub.

In some embodiments, when securing the battery pack to the umbrella hub the projection is positioned above the support portion and the first portion of the housing of the battery pack is rotated toward the second portion of the housing to couple the battery pack in a closed state. In other embodiments, the first portion and the second portion are separable from each other. The first and second portions can be brought together by one or more of translation and pivoting to a closed state with the projection positioned above the support portion of the umbrella hub.

In another embodiment, an umbrella hub includes a hub body, a downwardly extending surface, and a support portion. The hub body is configured to be disposed about an umbrella pole and for connection of umbrella structural members thereto. The hub body includes an upper surface and a lower surface. The downwardly extending surface extends from the lower surface of the hub body. The support portion extends generally perpendicular to the downwardly extending surface. The support portion is configured to secure a battery pack to the umbrella hub.

In some embodiments, one or more surfaces of the umbrella hub, e.g., the downwardly extending surface includes one or more electrical contacts configured to electrically couple with the battery pack.

In some embodiments, the umbrella hub includes a first clocking feature configured to align with a corresponding second clocking feature of the battery pack.

In some embodiments, the first clocking feature includes a recess in the lower surface of the hub body, the recess configured to align with the second clocking feature of the battery pack.

In some embodiments, the hub body further comprises a plurality of rib engagement sections, each rib engagement section extending from the upper surface to the lower surface, wherein the lower surface comprises a first clocking feature in a portion of the lower surface adjacent a rib engagement section of the plurality of rib engagement sections, the first clocking feature configured to align with a second clocking feature of the battery pack.

In some embodiments, the downwardly extending surface has a first diameter that is less than a second diameter of the support portion.

In some embodiments, the support portion is disposed at an end of the downwardly extending surface.

In some embodiments, the support portion is configured to be disposed around, e.g., to encircle the umbrella pole when the umbrella hub is coupled thereto.

In another embodiment, a battery pack includes a housing, an outer periphery, an inner periphery, a channel, a recessed area, and a battery cell. The housing includes a first portion and a second portion. The outer periphery and the inner periphery are each defined in part by the first portion and the second portion. The channel is formed by the inner periphery. The channel is configured to be disposed about an umbrella pole. The recessed area is disposed between an end of the channel and a projection extending from the inner periphery. The projection encloses a portion of the recessed area. The recessed area is configured to receive a support portion of an umbrella hub to couple the battery pack to the umbrella hub. The battery cell is disposed in the housing and configured to supply or receive power.

In some embodiments, the battery pack includes an electrical contact disposed, for example, on an inner perimeter of the projection.

In some embodiments, the first portion of the housing and the second portion of the housing are rotatably coupled via a hinge. In some embodiments, the first portion of the housing and the second portion of the housing are pivotally coupled via a hinge. In some embodiments, the first portion of the housing and the second portion of the housing are detachable coupled via snap fit or other detachable connectors.

In some embodiments, an outward facing surface of the projection includes a protrusion configured to align with a recess in the umbrella hub.

In some embodiments, the channel has a first inner diameter, the recessed area has a second inner diameter, and the projection has a third inner diameter. The first inner diameter being smaller than the second inner diameter and the third inner diameter being smaller than the second inner diameter.

In some embodiments, the battery pack includes a button deflectable towards a vertical axis. The button is configured to engage and disengage a coupler securing the first portion and the second portion of the housing in a closed state. The button can allow the hinge to operate or can cause the detachable connectors to detach.

### BRIEF DESCRIPTION OF THE DRAWINGS

Features of the invention can be better understood from the following detailed description when read in conjunction with the accompanying schematic drawings, which are for illustrative purposes only. The drawings include the following figures:
FIG. 1A is a perspective view of an umbrella assembly including an umbrella hub coupled with a battery pack;
FIG. 1B is a top view of the umbrella assembly of FIG. 1A including a solar panel assembly;
FIG. 2Ais a detail perspective view of the umbrella hub coupled with the battery pack shown in the umbrella assembly of FIG. 1A;
FIG. 2B is a detail perspective view of the umbrella hub coupled with the battery pack shown in the umbrella assembly of FIG. 1A, a portion of the battery pack being removed for illustrative purposes;
FIG. 3 is a top perspective view of the battery pack shown in FIG. 1A;
FIG. 4 is a bottom perspective view of the battery pack shown in FIG. 1A;
FIG. 5 is a front view of the battery pack shown in FIG. 1A;
FIG. 6 is a back view of the battery pack shown in FIG. 1A;
FIG. 7 is a first side view of the battery pack shown in FIG. 1A;
FIG. 8 is a second side view of the battery pack shown in FIG. 1A;
FIG. 9 is a top view of the battery pack shown in FIG. 1A;
FIG. 10 is a bottom view of the battery pack shown in FIG. 1A;
FIG. 11 is a cross-sectional view of the battery pack shown in FIG. 1A taken along line 11-11 shown in FIG. 9;
FIG. 12 is a perspective view of the battery pack shown in FIG. 1A in an open configuration;
FIG. 13 is a perspective view of the umbrella hub shown in FIG. 1A disposed on a pole of an umbrella assembly;
FIG. 14 is a top perspective view of the umbrella hub shown in FIG. 1A;
FIG. 15 is a bottom perspective view of the umbrella hub shown in FIG. 1A;
FIG. 16 is a top view of the umbrella hub shown in FIG. 1A;
FIG. 17 is a bottom view of the umbrella hub shown in FIG. 1A;
FIG. 18 is a front view of the umbrella hub shown in FIG. 1A;
FIG. 19 is a back view of the umbrella hub shown in FIG. 1A
FIG. 20 is a first side view of the umbrella hub shown in FIG. 1A;
FIG. 21 is a second side view of the umbrella hub shown in FIG. 1A;
FIG. 22 illustrates a portion of the umbrella assembly of FIG. 1A showing the battery pack in the process of being coupled to the umbrella hub; and
FIG. 23 is a cross-sectional view of a portion of the umbrella assembly of FIG. 1A.

### DETAILED DESCRIPTION

While the present description sets forth specific details of various embodiments, it will be appreciated that the description is illustrative only and should not be construed in any way as limiting. Furthermore, various applications of such embodiments and modifications thereto, which may occur to those who are skilled in the art, are also encompassed by the general concepts described herein. Each and every feature described herein, and each and every combination of two or more of such features, is included within the scope of the present invention provided that the features included in such a combination are not mutually inconsistent.

This application is directed to umbrella hub assemblies configured to couple with a battery pack or a battery pack assembly. In some instances, the umbrella hub assemblies can be configured to couple with a module, e.g., a battery pack, a light, a speaker, or other load. The battery pack can be moved up and down with the hub if the hub is configured as a runner. The battery pack assembly can supply to or receive power from another device on or coupled with an umbrella into which the umbrella hub assembly is integrated.

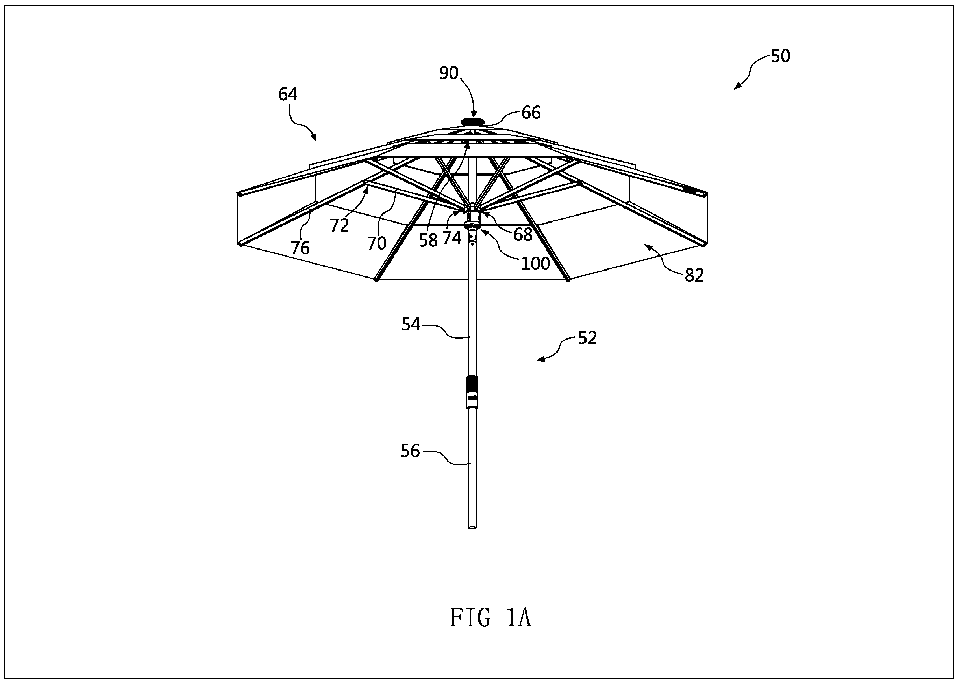

FIG. 1A shows an umbrella assembly 50 that includes a pole or pole assembly 52 that can extend up to a central internal area of a shade assembly 64. Other embodiments can be provided where the shade assembly 64 is supported from a side position or a top position, e.g., in a cantilever or wall mounted umbrella configuration. The pole assembly 52 includes an upper pole portion 54 and a lower pole portion 56 which can be separate or separable from the upper pole portion 54. The umbrella assembly 50 can include an upper hub 66. The upper hub 66 can be fixed to (e.g., riveted or bolted to) the upper pole portion 54 at or adjacent to an upper end 58 of the upper pole portion 54. The umbrella assembly 50 can include a lower hub 68 configured to be slidably disposed on the pole assembly 52, e.g., moveable upward and downward along the umbrella assembly 50. The manner of movement of the lower hub 68 is not limiting. The lower hub 68 can be coupled to an array of struts 70. A first end 72 of each of the struts 70 is coupled with a middle portion of a corresponding rib 76 of a plurality of ribs 76 of the umbrella assembly 50. A second end 74 of each of the struts 70 is coupled with the lower hub 68. Each of the ribs 76 includes a first end coupled with the upper hub 66 and a second end opposite the first end disposed at a periphery of the shade assembly 64. The shade assembly 64 can include the combination of struts 70 and ribs 76 as well as a shade member 82 disposed over these umbrella structural members.

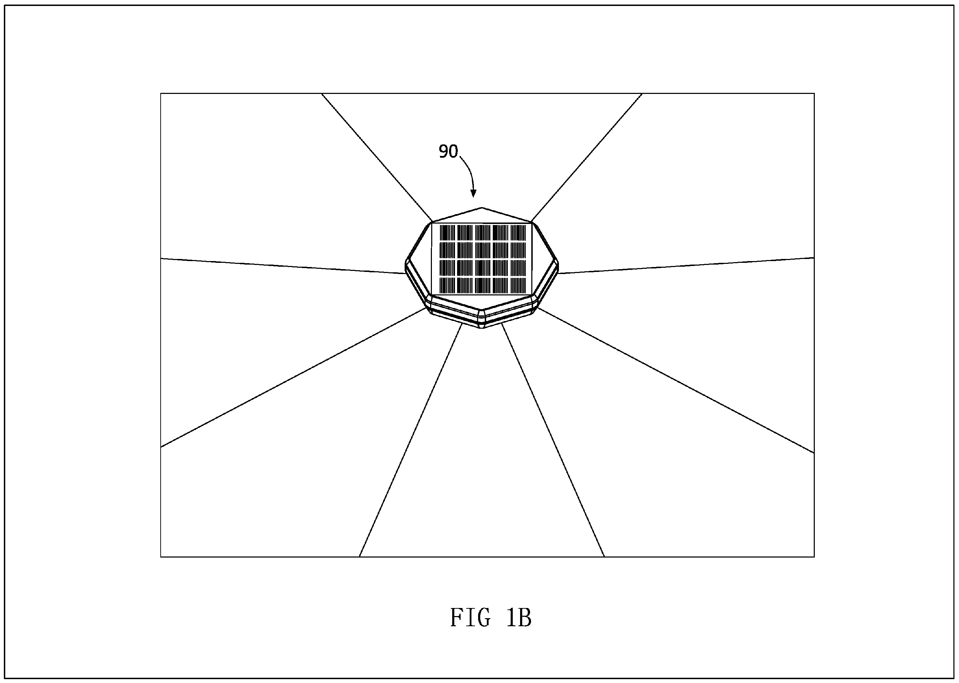

In some embodiments the umbrella assembly 50 is electrified, meaning that a source of electricity such as a solar panel 90, as shown in FIG. 1B, or a load (e.g., a motor, lights, speakers, cameras or other device consuming power) is mounted to the umbrella assembly 50. In the illustrated embodiment the solar panel 90 is disposed at the top of the upper pole portion 54, e.g., coupled to the upper hub 66 which can be coupled with the upper end 58 of the pole assembly 52. The solar panel 90 can generate electricity when exposed to solar energy. Solar energy captured by the solar panel 90 can be directed to a battery pack 100 coupled with a hub, e.g., with the upper hub 66 or with the lower hub 68, as illustrated.

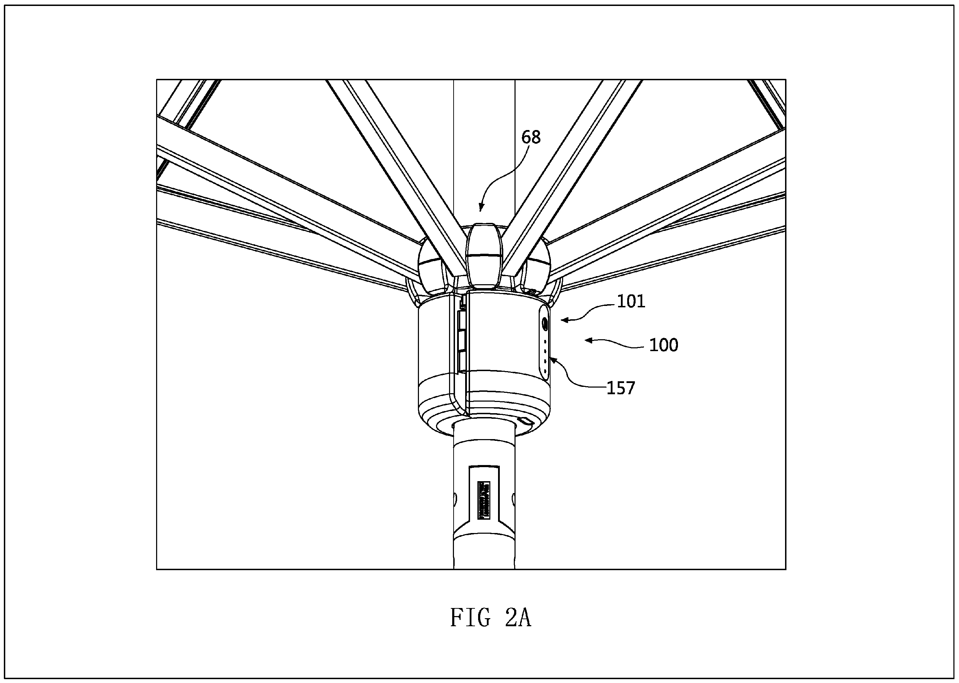

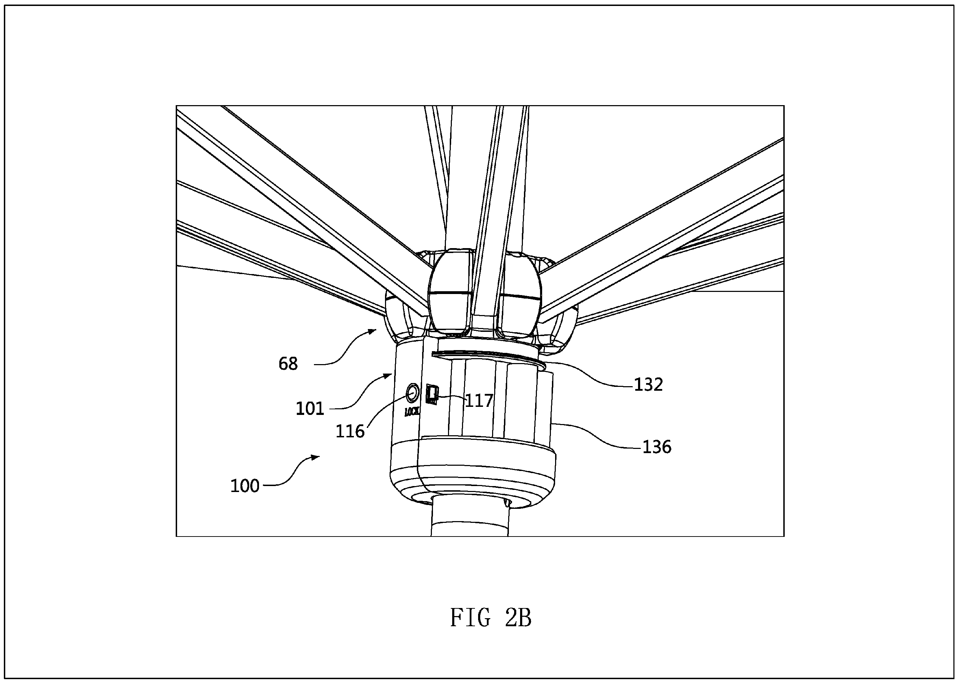

FIGS. 2A and 2B illustrate views of the lower hub 68 coupled with the battery pack 100. While the battery pack 100 is shown coupled with the lower hub 68, it should be understood that the battery pack 100 could alternatively be coupled with the upper hub 66. A portion of the battery pack 100 is removed in FIG. 2B in order to illustrate the coupling between the battery pack 100 and the lower hub 68.

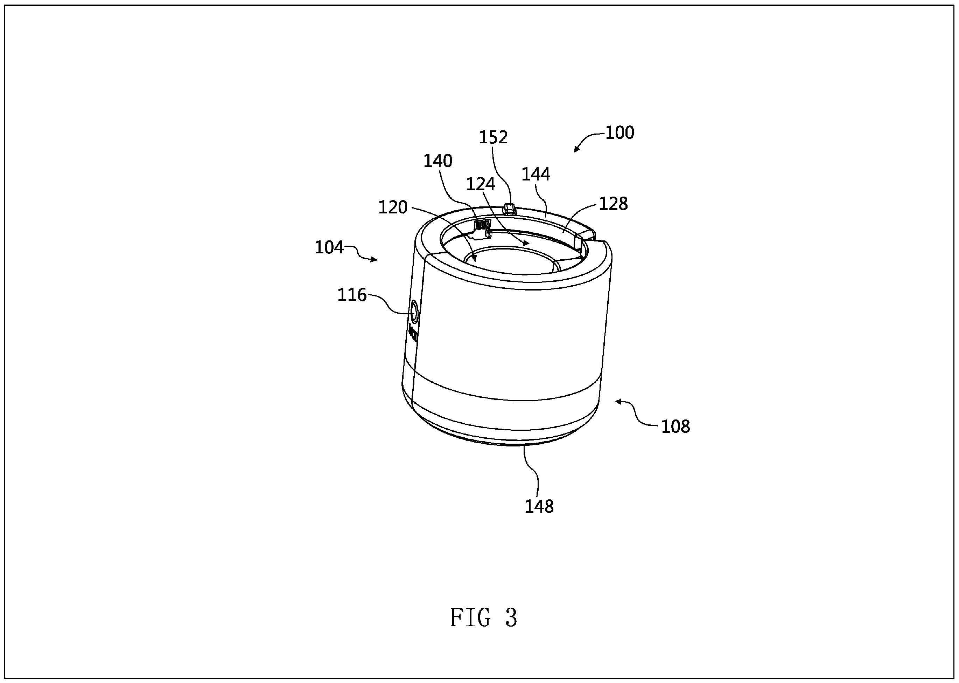

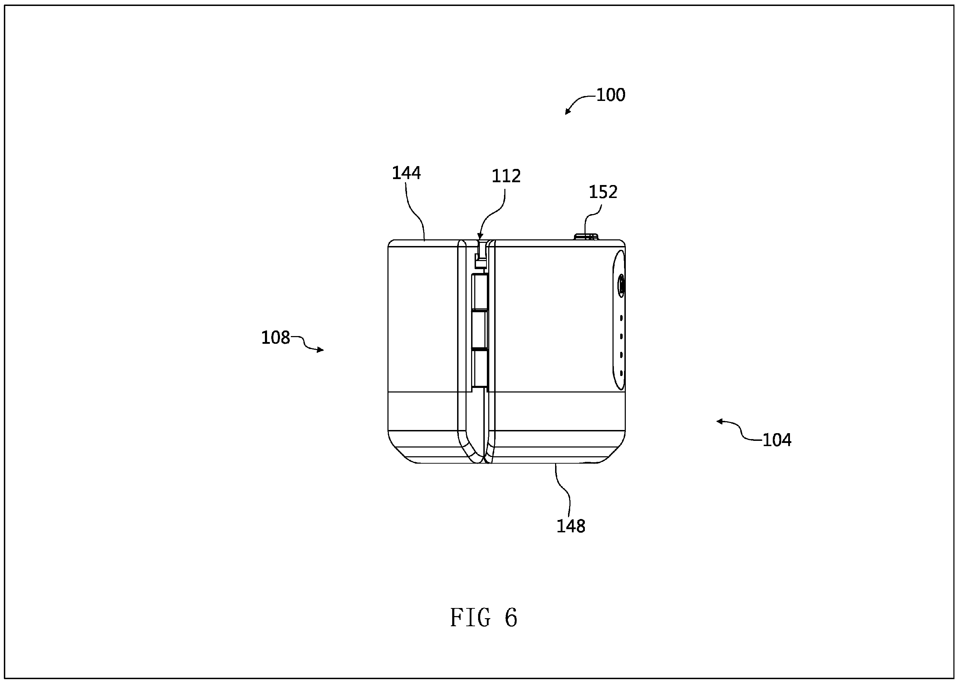

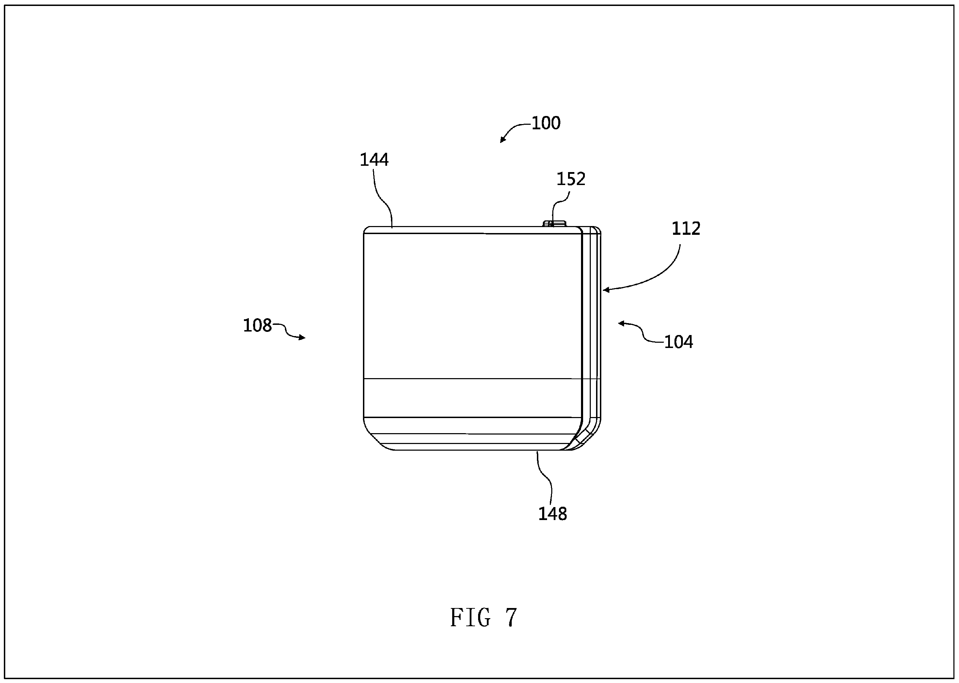

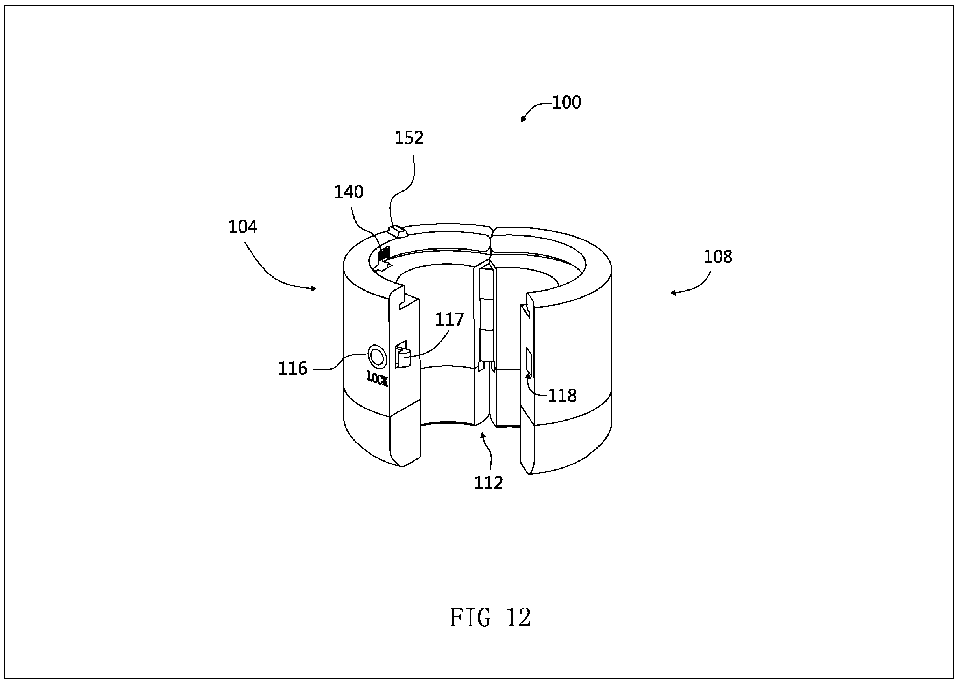

FIGS. 3-12 illustrate various views of the battery pack 100. The battery pack 100 can include a housing 101. The housing 101 can include a first portion 104 and a second portion 108. The first portion 104 and the second portion 108 can be rotatably coupled. In some embodiments, the first portion 104 and the second portion 108 can be rotatably coupled via a hinge 112. FIGS. 3-10 illustrate the battery pack 100 in a closed configuration, while FIG. 12 illustrates the battery pack 100 in an open configuration. The battery pack 100 can be transitioned between the open and closed configurations to couple and de-couple the battery back 100 with the lower hub 68. Where the connection is by a hinge, one portion of a periphery of the housing 101 is open while an opposite portion of the periphery is connected and closed, providing a C-shaped configuration. Where the connection is by detachable connectors, the first and second portions 104, 108 can be completely separated from each other, e.g., forming two semicircular outer peripheries.

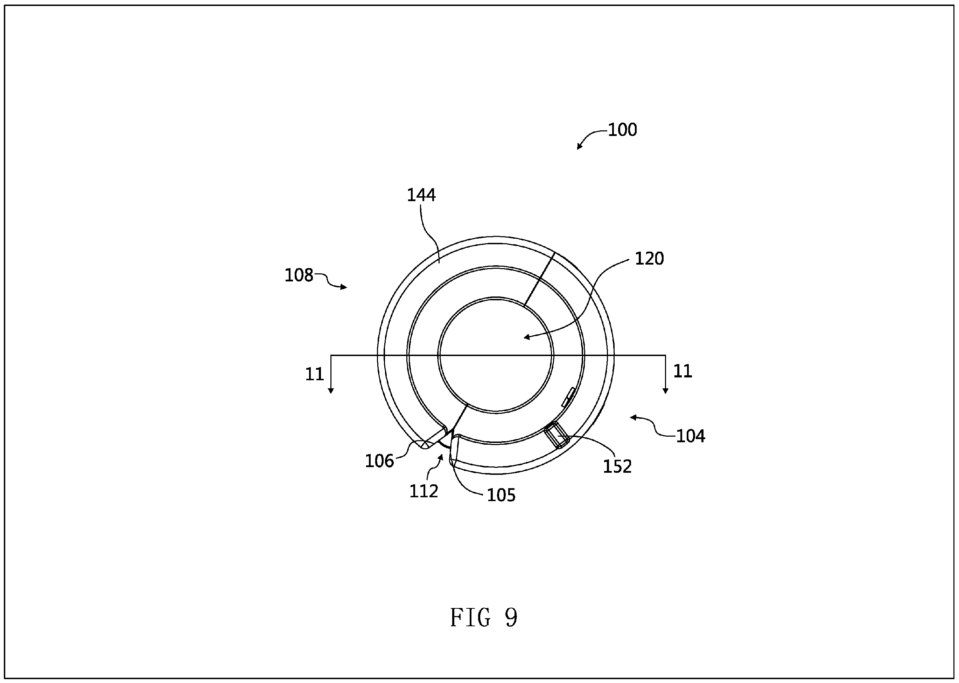

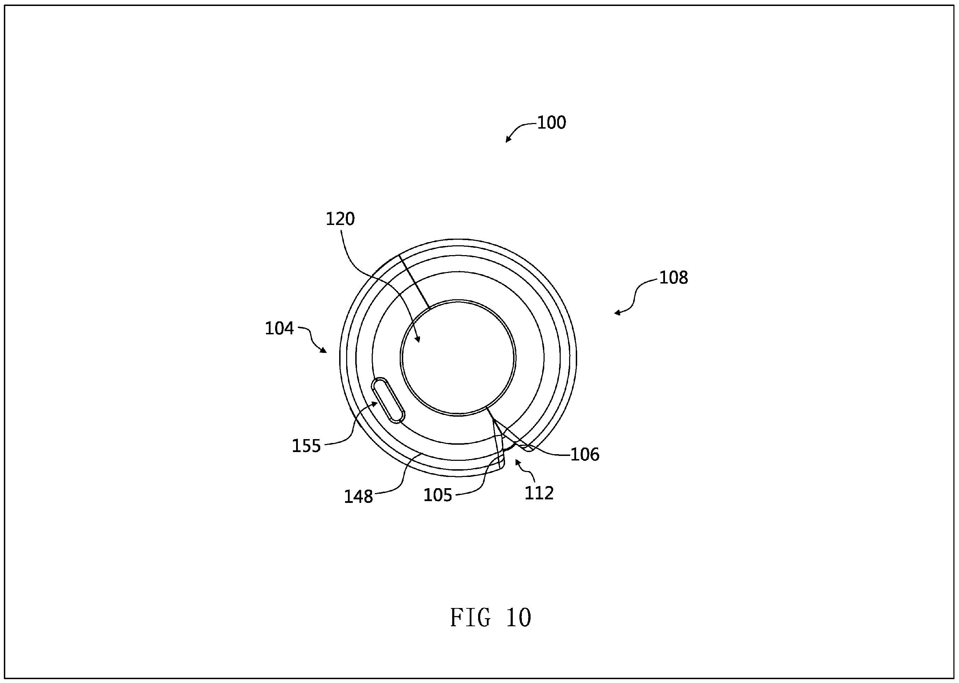

In some embodiments, the first portion 104 and/or the second portion 108 can have an angled wall 105, 106, as shown in FIGS. 9 and 10. The angled walls 105, 106 can be located at the hinge 112. The angled walls 105, 106 can limit the rotation of the first portion 104 and the second portion 108 away from each other when opening the battery pack 100. The angled walls 105, 106 can come into contact with each other to stop rotation of the first portion 104 and the second portion 108 away from each other. The range of motion provided by the angled walls 105, 106 is configured to cause an opening in the periphery of the housing 101 opposite to the walls to be provided that is greater than the size of an umbrella pole to be accommodated between the first and second portions 104, 108.

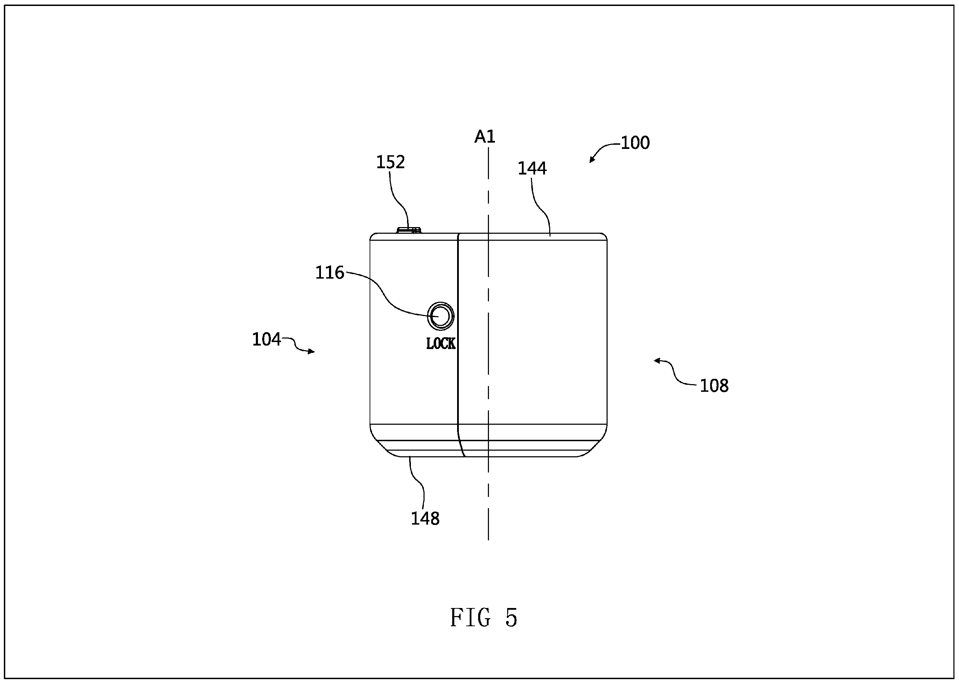

The battery pack 100 can include a button 116. The button 116 can be disposed in one of the first portion 104 or the second portion 108. The button 116 can be deflectable towards a central axis A1 of the battery pack 100, as labeled in FIG. 5. The button 116 can actuate a coupler. In some embodiments, the coupler can be a hook 117. A recess 118 in the other of the first portion 104 or the second portion 108 can be configured to receive the hook 117. The hook 117 can engage the recess 118 to secure the first portion 104 and the second portion 108 of the battery pack 100 in a closed configuration. A user can press or push the button 116 to disengage the hook 117 and the recess 118 to allow the first portion 104 and the second portion 108 to be rotatably separated.

The battery pack 100 can include an inner periphery defined in part by the first portion 104 and the second portion 108. The battery pack 100 can include an outer periphery defined in part by the first portion 104 and the second portion 108. The inner periphery can define a channel 120. The channel 120 can be disposed about the pole assembly 52 when the battery pack 100 is supported on the lower hub 68.

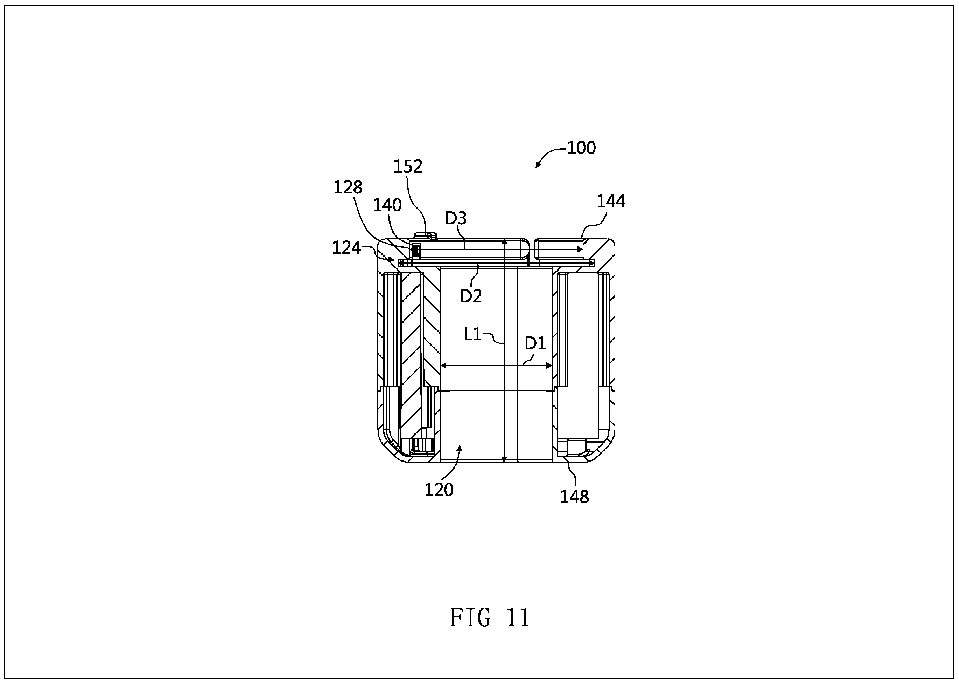

In some embodiments, the channel 120 can have a varying diameter along its length L1, as shown in FIG. 11. For example, the channel 120 can have a first portion having a first diameter D 1, a second portion having a second diameter D2, and a third portion having a third diameter D3. The first portion can be configured to be disposed around the pole assembly 52. In some embodiments, the first portion can directly contact the pole assembly 52 or can be separated therefrom by a small distance allowing movement of the battery pack 100 along the pole assembly 52. In some embodiments, there may be a gap between the first portion and the pole assembly 52. In some embodiments, the second portion can be a recessed area 124. In some embodiments, the third portion can be a projection 128 extending toward the central axis A1. In some embodiments, the first diameter D1 can be less than the second diameter D2. In some embodiments, the second diameter D2 can be less than the third diameter D3. In some embodiments, the first diameter D 1 and the second diameter D2 can be the same. In some embodiments, the first diameter D1 and the third diameter D3 can be the same. In some embodiments, the first diameter D1 can be less than the third diameter D3.

The recessed area 124 can be defined in part by the first portion 104, by the second portion 108 or in part by both the first portion 104 and the second portion 108. The recessed area 124 can be configured to receive a support portion 132 of the lower hub 68 as described herein. In some embodiments, the recessed area 124 can extend around the inner periphery of the battery pack 100. In some embodiments, the recessed area 124 can extend partially around the inner periphery of the battery pack 100. In some embodiments, the battery pack can include more than one recessed area 124. The recessed area 124 may have a height that corresponds to e.g., is larger than the support portion 132, the thickness of the support portion 132 of the lower hub 68 to allow the pack 100 to be closed around the hub 68 with the support portion 132 disposed in the recessed area 124. The recessed area 124 may have a depth that corresponds to the width of the support portion 132 of the lower hub 68.

The projection 128 can enclose a portion of the recessed area 124. In some embodiments, the projection 128 can be disposed above the support portion 132 of the lower hub 68 as described herein when the battery pack 100 is coupled to the lower hub 68. A lower surface of the projection 128 can rest on an upward facing surface of the support portion 132. The recessed area 124 and the projection 128 can assist in coupling the battery pack 100 to the lower hub 68. In some embodiments, the projection 128 can extend around the inner periphery of the battery pack 100. In some embodiments, the projection 128 can extend partially around the inner periphery of the battery pack 100. In some embodiments, the battery pack can include more than one projection 128.

One or more battery cells 136 can be disposed within the housing 101 of the battery pack 100. The one or more battery cells 136 can be disposed in the first portion 104 and/or the second portion 108. The battery cells 136 can be configured to supply power or to receive power. The battery pack 100 can include a contact 140 (e.g., an electrical contact) configured to supply or receive the power. While the contact 140 is illustrated on the projection 128, the contact 140 can be disposed on any surface or combination of surfaces of the battery pack 100. For example, the contact 140 can be disposed on any portion of the inner periphery of the battery pack 100, the contact 140 can be disposed in the recessed area 124, the contact 140 can be disposed on an upper surface 144 of the battery pack 100, the contact 140 can be disposed on a lower surface 148 of the battery pack 100, and/or the contact 140 can be disposed on any portion of the outer periphery of the battery pack 100.

In some embodiments, the battery pack 100 can include a clocking feature 152. The clocking feature 152 can be configured to align with a clocking feature 180 of the lower hub 68 as described herein. The clocking feature 152 can be configured to align the contact 140 and a contact 178 of the lower hub 68 as described herein. In some embodiments, the clocking feature 152 can include a protrusion. In some embodiments, the clocking feature 152 can include a recess.

In some embodiments, the clocking feature 152 can be disposed on the upper surface 144 of the battery pack 100. In some embodiments, the clocking feature 152 can be disposed on an inner surface of the projection 128. In some embodiments, the clocking feature 152 can be disposed in the recessed area 124.

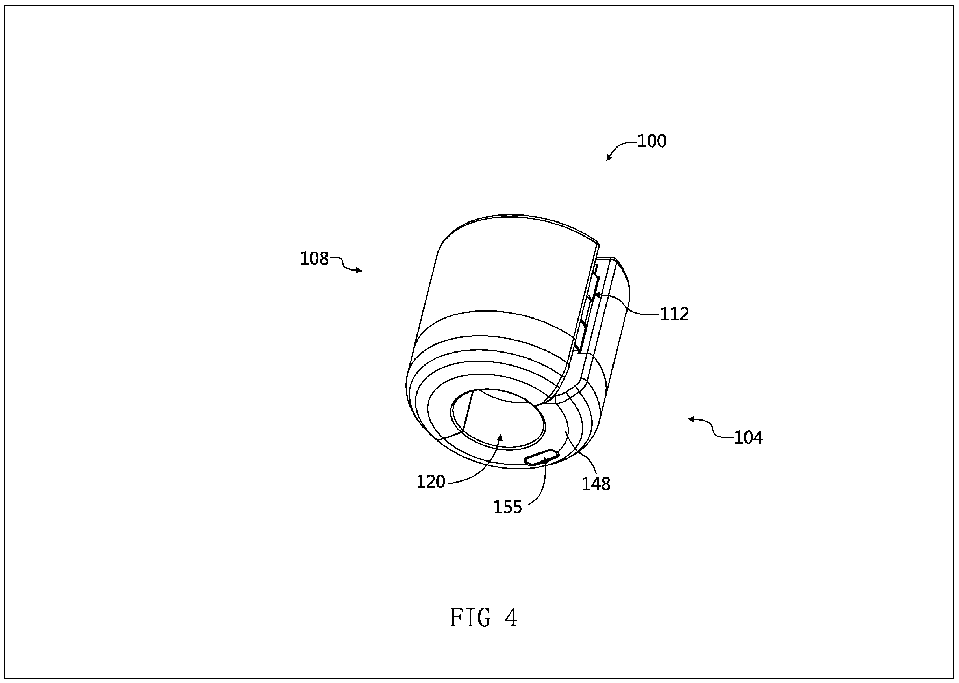

The battery pack 100 can include a charge port 155, as shown in FIGS. 4 and 10. While the charge port 155 is shown on the lower surface 148 of the battery pack 100, the charging port 155 can be positioned on any surface of the battery pack 100. The charge port 155 can be configured to enable the battery pack 100 to be charged by plugging into a power source. The charge port 155 can be configured to connect to other battery operated devices to charge such devices through the charge port 155, for example a cell phone or electronic device. The charge port 155 can also supply current to directly operate another device rather than only replenishing a battery in the other device. The charging port 155 can include a removable cover to protect the charge port 155.

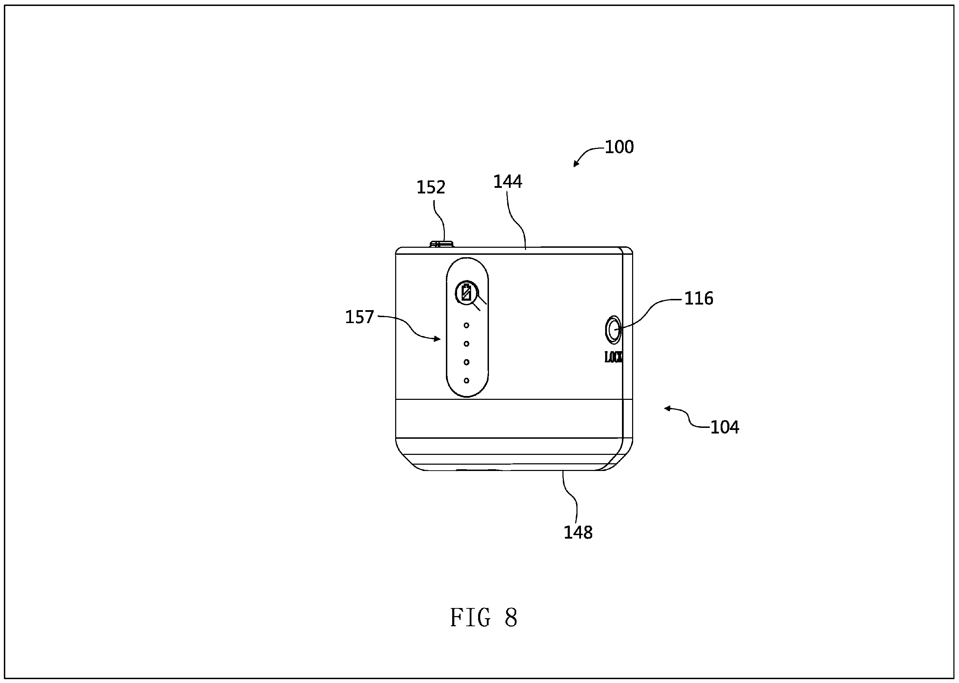

The battery pack 100 can include a user interface 157, as shown in FIGS. 2A and 8. The user interface 157 can be formed on or in a surface of the housing 101. The user interface 157 can include a power button for turning the battery pack 100 on and off. The power button can allow current stored in the battery cell 136 to be deliver to a load on the umbrella assembly 50, for example. The power button can allow current to be delivered to the battery cell 136 to be stored, as another example. The user interface 157 can also include a visual display for outputting messages to the user. The visual display can include a status bar indicative of the amount of charge stored in the battery cell 136, e.g., the percentage of charge capacity that is charged at any specific moment. The visual display can also include one or more lights, e.g., a vertical array of lights, which can indicate that the battery pack 100 is powered on and operational or whether current is being drawn from or delivery to the battery pack as non-limiting examples.

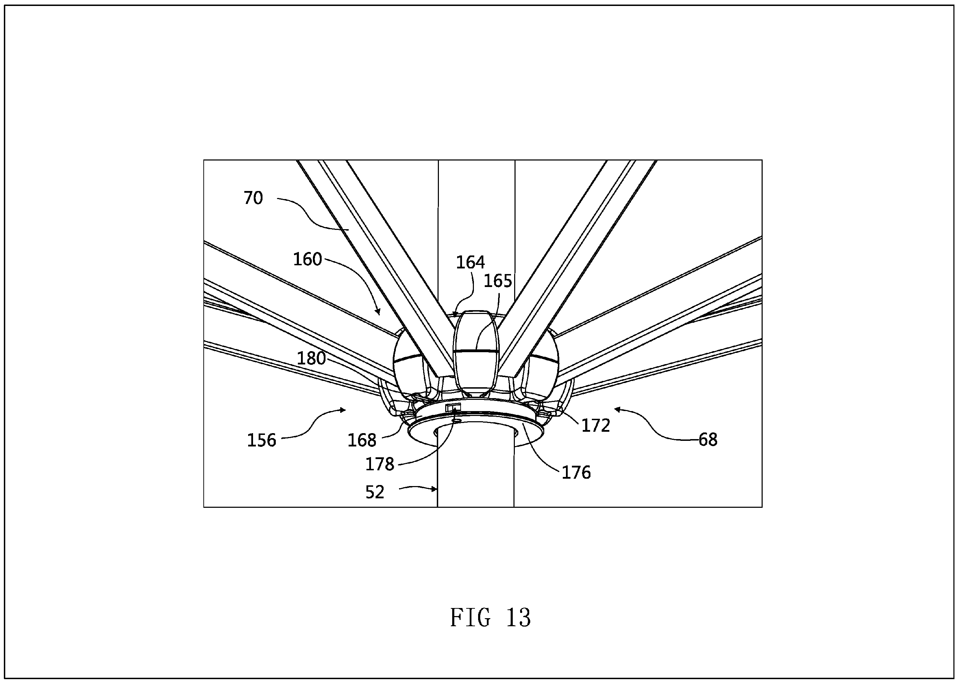

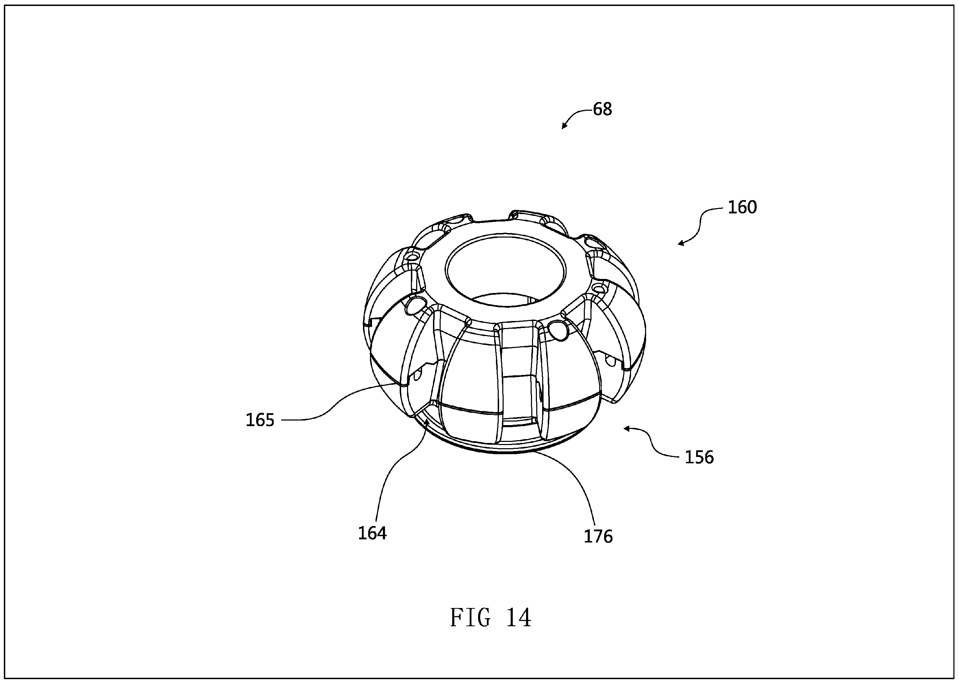

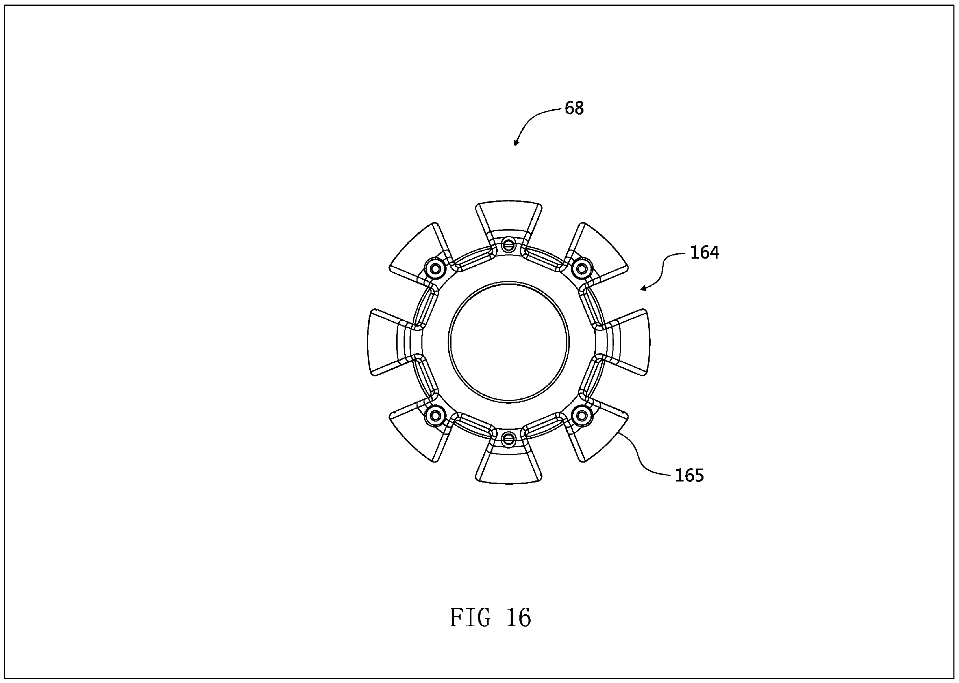

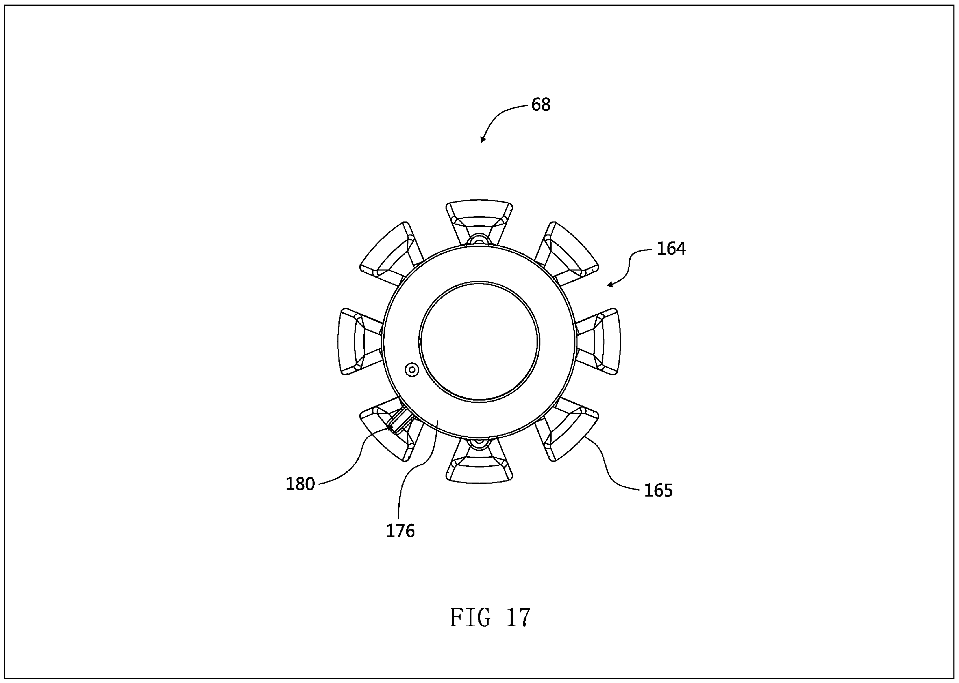

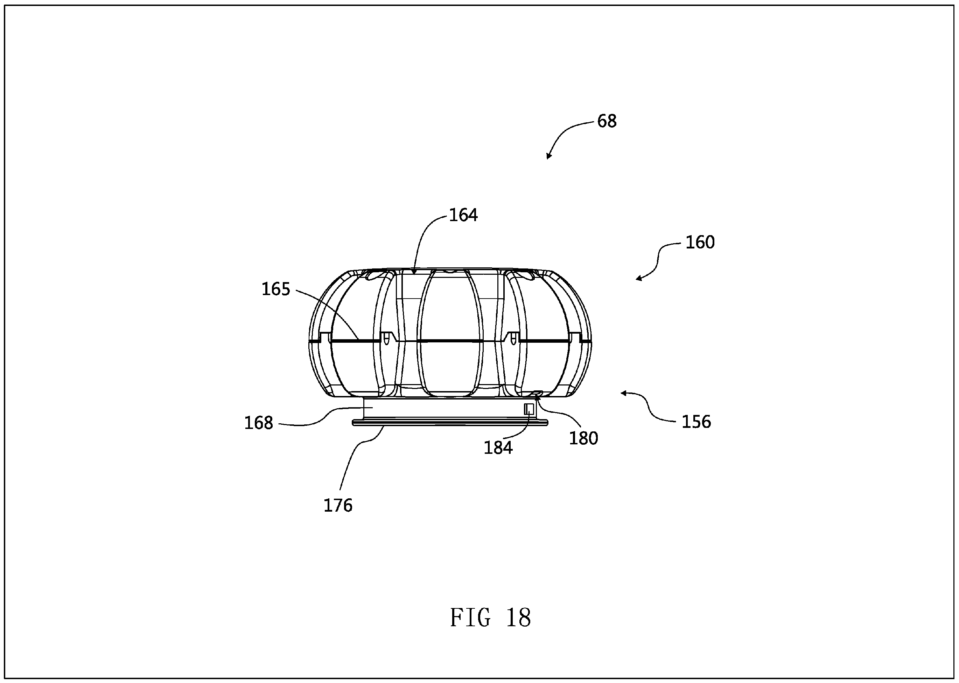

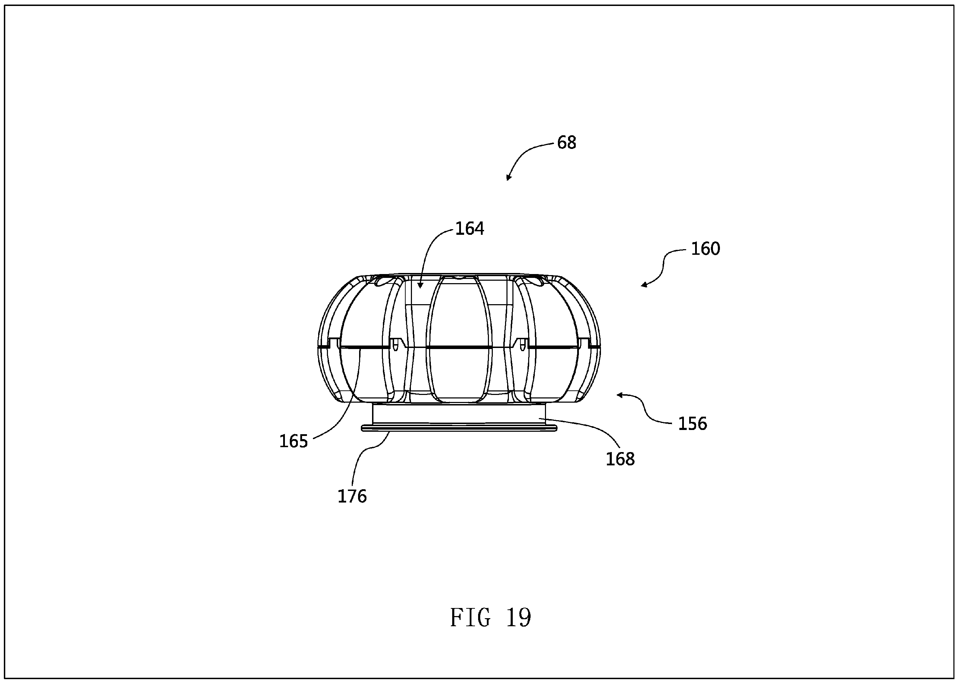

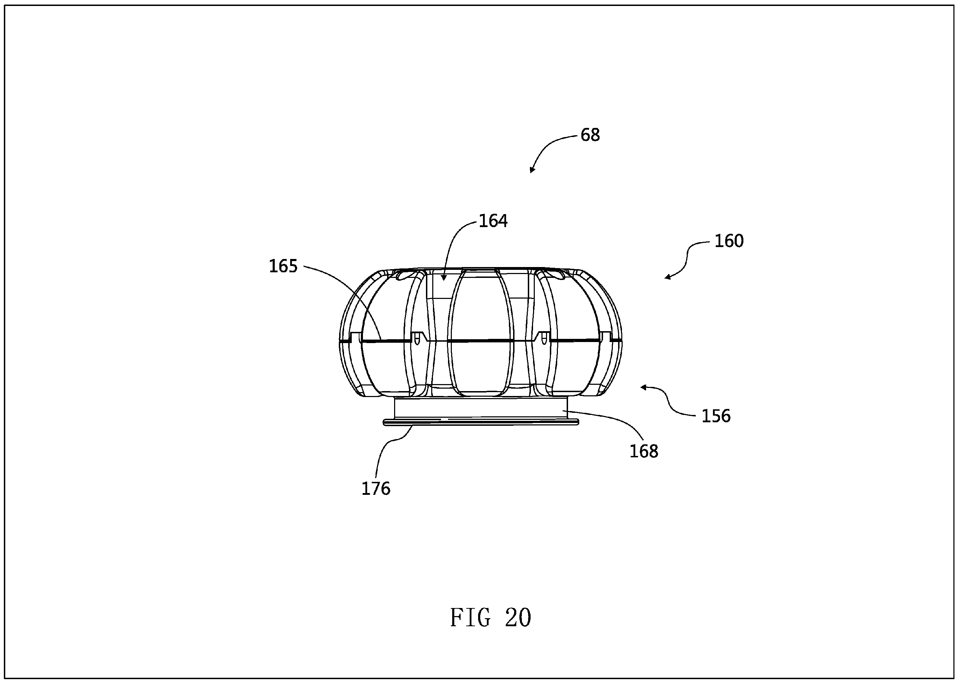

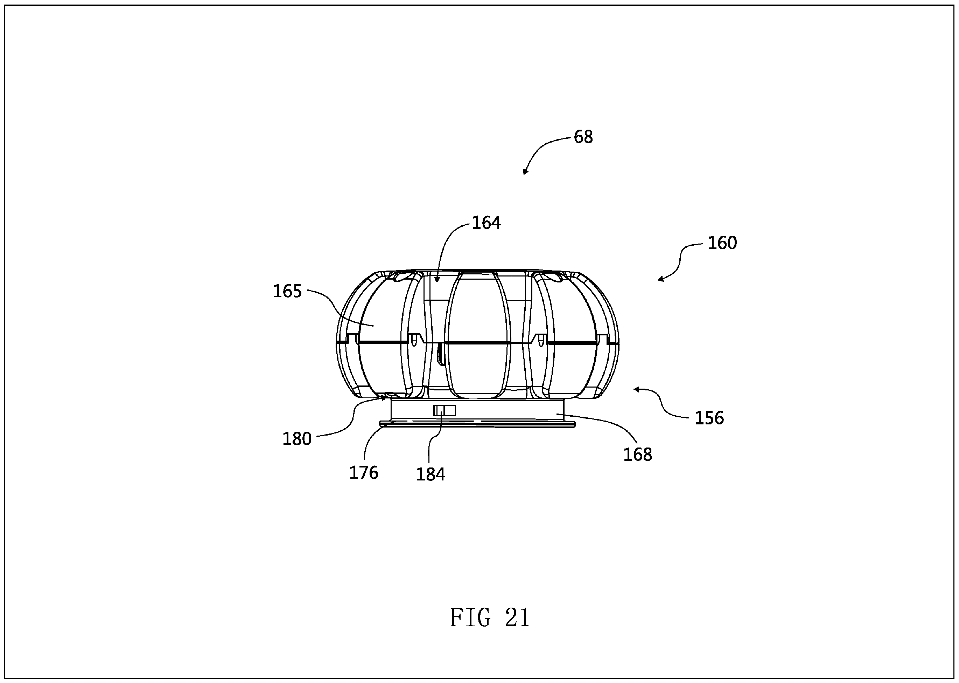

FIGS. 13-21 illustrate various views of the lower hub 68. While a lower hub is shown, it should be understood that an upper hub could incorporate features described herein with reference to the lower hub 68. FIG. 13 is a perspective view of a portion of a variant of the umbrella assembly 50 showing the lower hub 68 disposed along the pole assembly 52. In some embodiments, the lower hub 68 can include a lower portion 156 and an upper portion 160 joined to the lower portion 156. When joined together the lower portion 156 and the upper portion 160 can form a hub body. The hub body can be a unitary structure without separate portions in some embodiments. The hub body can include a plurality of connection zones 164 that can be coupled with the second end 74 of the struts 70. The connection zones 164 can extend through the upper portion 160 and the lower portion 156. Adjacent connection zones 164 can be separated by portions 165 of the hub body. The portions 165 of the hub body can be formed by the upper portion 160 and the lower portion 156.

The lower hub 68 can include a downwardly extending surface 168. The downwardly extending surface 168 can extend from a lower surface 172 of the lower portion 156 of the hub body. In some embodiments, the downwardly extending surface 168 can extend in a direction that would be generally parallel to a longitudinal axis of the pole assembly 52 when the lower hub 68 is coupled thereto.

The lower hub 68 can include a support surface 176. The support surface 176 can be disposed at or near a lower surface 172 of the lower portion 156 of the hub body. In some embodiments, the support surface 176 can extend generally perpendicular to the downwardly extending surface 168. In some embodiments, the support surface 176 can extend outward at an angle, e.g., 90 degrees to the longitudinal axis of the pole assembly 52 or another angle, for example, the support surface 176 can extend upwardly and at an acute angle to the longitudinal axis of the pole assembly 52. The support surface 176 can be configured to couple the battery pack 100 to the lower hub 68. In some embodiments, the support surface 176 can be a continuous surface extending around the pole assembly 52. In some embodiments, the support surface 176 can include one or more sections that may or may not be contiguous or connected to each other.

The lower hub 68 can include a contact 178 (e.g., an electrical contact) configured to supply or receive the power, as shown in FIG. 13. While the contact 178 is illustrated on the downwardly extending surface 168, the contact 178 can be disposed on any surface of the lower hub 68. For example, the contact 178 can be disposed on the support surface 176 and/or the contact 178 can be disposed on the lower portion 156 of the hub body. In some embodiments, the contact 178 can extend through or be positioned in an opening 184 of the lower hub 68. The opening 184 can extend through the downwardly extending surface 168.

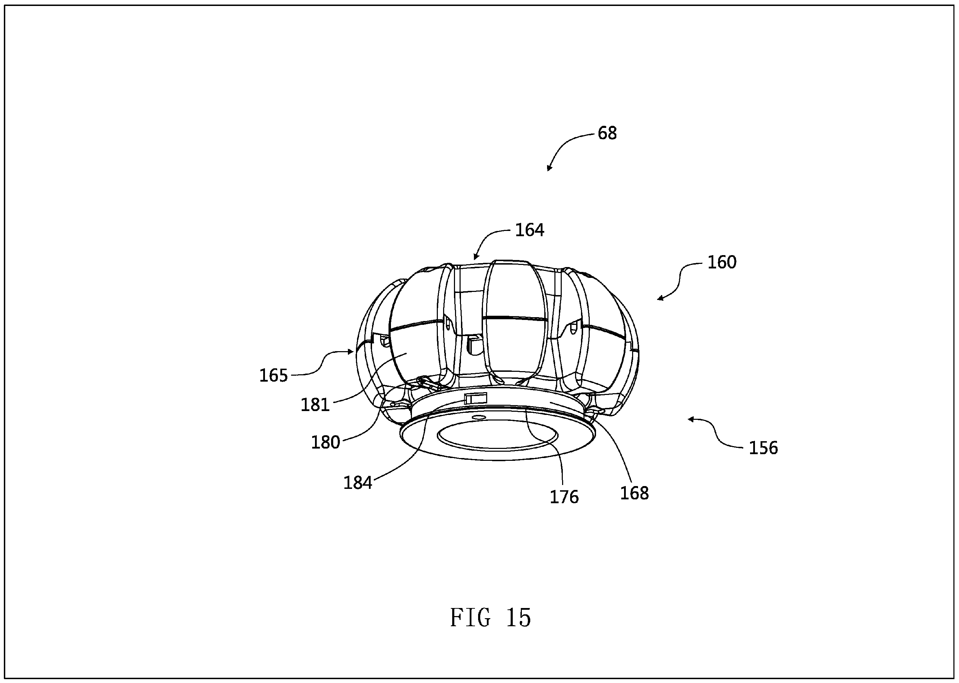

In some embodiments, the lower hub 68 can include a clocking feature 180. The clocking feature 180 can be configured to align with the clocking feature 152 of the battery pack 00. The clocking feature 180 can be configured to align the contact 178 and the contact 140 of the battery pack 100. In some embodiments, the clocking feature 180 can be a recess. In some embodiments, the clocking feature 180 can be a protrusion. The clocking feature 180 can be configured to engage the clocking feature 152 of the battery pack 100. In some embodiments, the clocking feature 180 can extend at least partially up a sidewall 181 of one of the portions 164 of the hub body, as shown in FIG. 15.

In some embodiments, the clocking feature 180 can be disposed on a lower surface of one of the portions 165 of the hub body separating adjacent connection zones 164. In some embodiments, the clocking feature 180 can be disposed on the downwardly extending surface 168. In some embodiments, the clocking feature 180 can be disposed on the support surface 176.

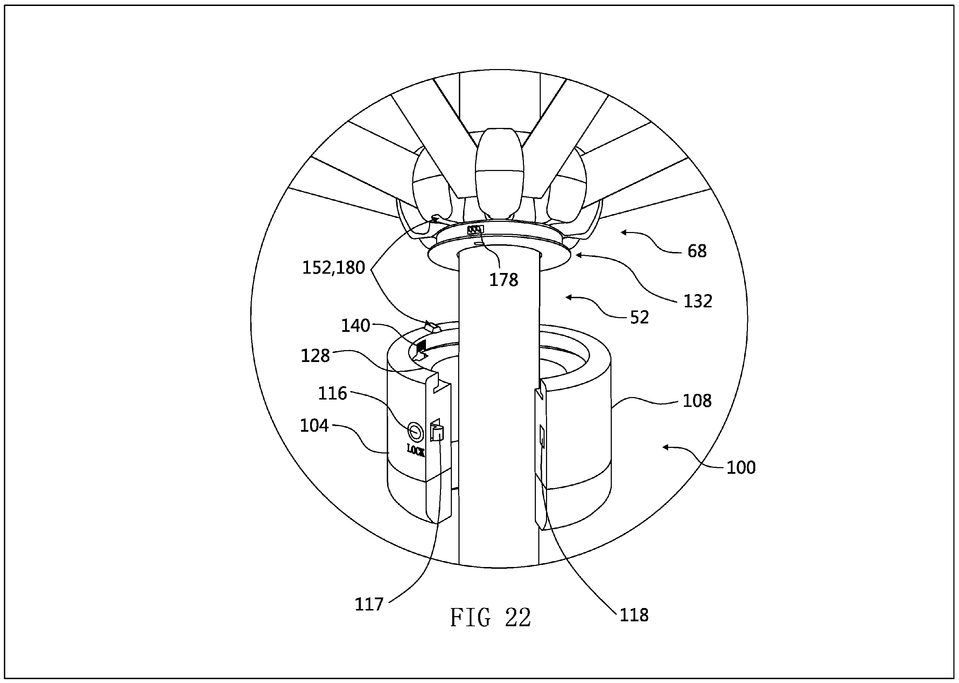

FIG. 22 illustrates the battery pack 100 in the process of being coupled and/or removed from the lower hub 68. As shown, the first portion 104 and the second portion 108 can be rotatably separated from each other. The button 116 can be pushed to disengage the hook 117 from the recess 118. While the button 116 is illustrated in the first portion 104 and the recess 118 is illustrated in the second portion 108, the positioning of the button 116 and the recess 118 can be switched, for example, the button 116 can be in the second portion 108 and the recess 118 can be in the first portion 104.

After disengaging the hook 117 and the recess 118 and at least partially opening or separating the first portion 104 and the second portion 108, the battery pack 100 can be disposed around the pole assembly 52. Alternatively, if removing the battery pack 100 from the lower hub 68, the battery pack 100 can be removed from around the pole assembly 52.

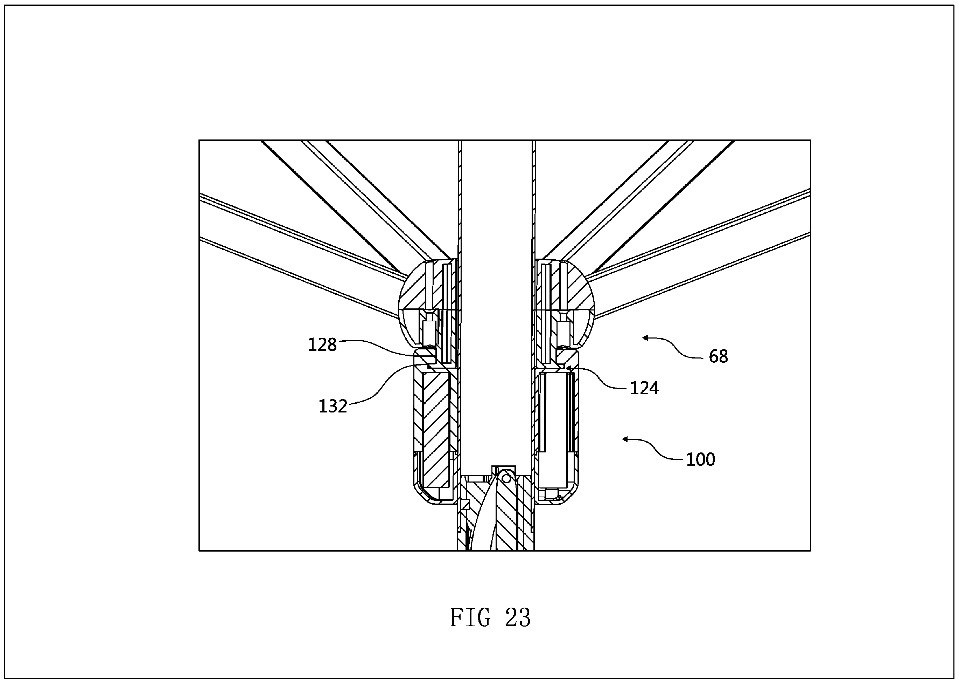

When coupling the battery pack 100 to the lower hub 68, the battery pack 100 can be positioned such that the projection 128 is positioned above the support portion 132 of the lower hub 68, as shown in FIG. 23. The support portion 132 can rest within the recessed area 124 of the battery pack 100. To ensure that the contact 140 of the battery pack 100 is aligned with the contact 178 of the lower hub 68, the clocking feature 152 of the battery pack 100 can align with the clocking feature 180 of the lower hub 68. In some embodiments, the clocking features 152, 180 can be aligned prior to positioning the projection 128 over the support portion 132. To secure the battery pack 100 to the lower hub 68, the first portion 104 and the second portion 108 can be rotated such that the hook 117 engages the recess 118 securing the battery pack 100 in a closed configuration.

## Claims

1. A battery pack (100), comprising:
a housing (101) comprising a first portion (104) and a second portion (108);
an outer periphery and an inner periphery each defined in part by the first portion (104) and the second portion (108);
a channel (120) formed by the inner periphery, the channel (120) configured to be disposed about an umbrella pole (52);
a recessed area (124) disposed between an end of the channel (120) and a projection (128) extending from the inner periphery, the projection (128) enclosing a portion of the recessed area (124), the recessed area (124) configured to receive a support portion (132) of an umbrella hub (68) to couple the battery pack (100) to the umbrella hub (68); and
a battery cell (136) disposed in the housing (101) and configured to supply or receive power.

2. The battery pack (100) of Claim 1, further comprising an electrical contact (140) disposed on an inner perimeter of the projection (128).

3. The battery pack of any one of Claims 1-2, wherein the first portion (104) of the housing (101) and the second portion (108) of the housing (101) are rotatably coupled via a hinge (112).

4. The battery pack (100) of any one of Claims 1-3, wherein an outward facing surface of the projection (128) comprises a protrusion configured to align with a recess in the umbrella hub (68).

5. The battery pack of any one of Claims 1-4, wherein the channel (120) has a first inner diameter (D1), the recessed area has a second inner diameter (D2), and the projection has a third inner diameter (D3), the first inner diameter (D1) being smaller than the second inner diameter (D2) and the third inner diameter (D3) being smaller than the second inner diameter (D2).

6. The battery pack (100) of any one of Claims 1-5, further comprising a button (116) deflectable towards a vertical axis (A1), the button (116) configured to engage and disengage a coupler (117) securing the first portion (104) and the second portion (108) of the housing (101) in a closed state.

7. An assembly (50) comprising:
the battery pack (100) of any one of Claims 1-6; and
the umbrella hub (68).

8. The assembly (50) of Claim 7, wherein the umbrella hub (68) comprises:
a hub body (68) configured to be disposed about an umbrella pole (52), the hub body (68) comprising an upper surface (160) and a lower surface (156); and
a support portion (176) disposed at the lower surface (156) of the hub body (68).

9. The assembly (50) of Claim 8, wherein the umbrella hub (68) comprises a first clocking feature (180) and the battery pack (100) comprises a second clocking feature (152), the first clocking feature (180) and the second clocking feature (152) configured to align a first electrical contact (178) and a second electrical contact (140).

10. An umbrella hub (68), comprising:
a hub body configured to be disposed about an umbrella pole (52) and for connection of umbrella structural members thereto, the hub body comprising an upper surface (160) and a lower surface (156);
a downwardly extending surface (168) extending from the lower surface (156) of the hub body; and
a support portion (176) extending generally perpendicular to the downwardly extending surface (168), the support portion (176) configured to secure a battery pack (100) to the umbrella hub (68).

11. The umbrella hub (68) of Claim 10, wherein the downwardly extending surface (168) comprises one or more electrical contacts (178) configured to electrically couple with the battery pack (100).

12. The umbrella hub (68) of any one of Claims 10-11, wherein the support portion (176) comprises one or more electrical contacts configured (178) to electrically couple with the battery pack (100).

13. The umbrella hub (68) of any one of Claims 10-12, further comprising a first clocking feature (180) configured to align with a second clocking feature (152) of the battery pack (100).

14. The umbrella hub (68) of any one of Claims 10-13, wherein the hub body further comprises a plurality of rib engagement sections (164), each rib engagement section (164) extending from the upper surface (160) to the lower surface (156), wherein the lower surface (156) comprises a first clocking feature (180) in a portion of the lower surface (156) adjacent a rib engagement section of the plurality of rib engagement sections (164), the first clocking feature (180) configured to align with a second clocking feature (152) of the battery pack (100).

15. The umbrella hub (68) of any one of Claims 10-14, wherein the downwardly extending surface (168) has a first diameter (D1) that is less than a second diameter (D2) of the support portion (176) and wherein the support portion (176) is disposed at an end of the downwardly extending surface (168).
